(19) Europäisches Patentamt

European Patent Office

Office européen des brevets

(11) Veröffentlichungsnummer: **0 456 901 B1**

(12) **EUROPÄISCHE PATENTSCHRIFT**

(45) Veröffentlichungstag der Patentschrift: **09.11.94**

(51) Int. Cl.⁵: **C07F 7/12**

(21) Anmeldenummer: **90123937.6**

(22) Anmeldetag: **12.12.90**

Die Akte enthält technische Angaben, die nach
dem Eingang der Anmeldung eingereicht wurden
und die nicht in dieser Patentschrift enthalten sind.

(54) **Verfahren zur Herstellung von Vinyltrichlorsilan.**

(30) Priorität: **18.05.90 DE 4016021**

(43) Veröffentlichungstag der Anmeldung:
**21.11.91 Patentblatt 91/47**

(45) Bekanntmachung des Hinweises auf die
Patenterteilung:
**09.11.94 Patentblatt 94/45**

(84) Benannte Vertragsstaaten:
**DE FR GB IT**

(56) Entgegenhaltungen:
**EP-A- 0 438 666**
**DE-A- 2 210 189**
**DE-B- 2 002 258**

**CHEMICAL ABSTRACTS Band 100, Juni 1984,
Seite611, Zusammenenfassung nr. 209968z,
Columbus, Ohio, US; M.M. FLORENTSEV et
al.:"Thermodynamics and kinetics of vinyltrichlorosilane preparation by the thermal

condensation method"**

(73) Patentinhaber: **HÜLS AKTIENGESELLSCHAFT**

**D-45764 Marl (DE)**

(72) Erfinder: **Hange, Willy
Mühlenstrasse 9
W-7851 Wittlingen (DE)**
Erfinder: **Seiler, Claus-Dietrich, Dr.
In der Klus 10
W-7888 Rheinfelden (DE)**
Erfinder: **Fiolitakis, Emanuel, Dr.
Annostrasse 82
W-5202 Hennef (DE)**
Erfinder: **Schön, Uwe, Dr.
Karl-Fürstenbergstrasse 62
W-7888 Rheinfelden (DE)**
Erfinder: **Dietsche, Helmut
Talstrasse 14
W-7888 Rheinfelden (DE)**

**Beschreibung**

Die vorliegende Erfindung betrifft ein Verfahren zur kontinuierlichen Herstellung von Vinyltrichlorsilan aus Trichlorsilan und Vinylchlorid durch Umsetzung Von Vinylchlorid mit Trichlorsilan bei Temperaturen von 400 bis 750 °C und mittleren Verweilzeiten von 0,2 bis 20 Sekunden bei Normaldruck in einem Rohrreaktor mit axialsymmetrisch darin angeordnetem rotierendem Verdrängerkörper.

Vinyltrichlorsilan ist ein wertvolles Produkt, das sich einen ausgedehnten Anwendungsbereich erschlossen hat; die daraus hergestellten Ester finden zum Beispiel bei der Schlichtung von Glasfasern oder bei der Herstellung von Kabelmaterialien Anwendung.

In der Patentanmeldung P 40 01 820.2 werden die Prinzipien dargelegt, nach denen der konstruktive Aufbau von Reaktoren vorzunehmen ist, um im großtechnischen Maßstab Vinyltrichlorsilan aus Trichlorsilan und Vinylchlorid nach dem erfindungsgemäßen Verfahren herzustellen. Mit Reaktoren, die entsprechend den Angaben der genannten Anmeldung gestaltet sind, wurde es möglich, der Größe der Reaktorringspaltquerschnittsfläche proportionale Reaktorleistungen zu erzielen. Großdimensionierte Reaktoreinheiten dieses Typs mit einem Durchmesser des äußeren Reaktionsrohres von 60 cm und einer Länge von 250 cm erbringen bei der in der genannten Anmeldung beschriebenen Betriebsweise Monatsleistungen von etwa 47 t des gewünschten Vinylchlorsilans. Zur Erzielung größerer Reaktorleistungen müßte man Reaktoren mit größerem Durchmesser und größerer Reaktorquerschnittsfläche verwenden; dies ist jedoch nur mit einem erhöhten Aufwand möglich.

Die mögliche Abhilfe zur Herstellung größerer Mengen an Vinyltrichlorsilan durch Aufstellen zusätzlicher Reaktionseinheiten hat ebenfalls den Nachteil, daß damit erhöhte Aufwendungen nötig sind.

Aus der DE-A-22 10 189 ist ein Verfahren zur Herstellung von Vinylchlorsilanen durch Umsetzung von Vinylchlorid mit einem Chlorsilan bekannt, bei welchem Reaktionskomponenten entweder zusammen oder getrennt innerhalb des Reaktors auf eine unterhalb der Temperatur der Reaktionszone liegende Temperatur vorgeheizt werden. Dieses Verfahren hat jedoch den Nachteil, daß mit steigender Menge an Ausgangsprodukten die Ausbeute an Vinylchlorsilan, bezogen auf die Einsatzmenge an Vinylchlorid, abnimmt.

Es bestand daher die Aufgabe, die Herstellung von Vinyltrichlorsilan so durchzuführen, daß die Raum-Zeit-Ausbeute der Reaktoren nachhaltig gesteigert wird und die Ausbeute an Vinyltrichlorsilan, bezogen auf die Einsatzmenge an Vinylchlorid, mit steigender Menge an Ausgangsprodukten nicht abnimmt.

In Erfüllung dieser Aufgabe wurde ein Verfahren zur kontinuierlichen Herstellung von Vinyltrichlorsilan aus Vinylchlorid und Trichlorsilan in Rohrreaktoren mit axialsymmetrisch darin angeordnetem rotierendem Verdrängerkörper bei Normaldruck gefunden, das dadurch gekennzeichnet ist, daß die Reaktionskomponenten vor Eintritt in den Reaktor auf Temperaturen von 120 bis 400 °C erwärmt werden.

Bei Anwendung dieser Verfahrensweise erhält man eine Steigerung der Raum-Zeit-Ausbeute, die nicht von einer Senkung der Umsatzrate der Reaktionsteilnehmer zu Vinyltrichlorsilan begleitet ist. Vielmehr wird auch die Umsatzausbeute verbessert.

Erfindungsgemäß werden unter dem Begriff Reaktionsteilnehmer oder Reaktionskomponenten die Ausgangsprodukte Trichlorsilan und Vinylchlorid verstanden. Diese beiden Verbindungen müssen, bevor sie in den Reaktor eintreten, eine Temperatur von mindestens 120 °C aufweisen, wenn eine Verbesserung der Raum-Zeit-Ausbeute bei der in der Patentanmeldung P 40 01 820.2 beschriebenen Verfahrensweise eintreten soll. Besonders große Erhöhungen der Raum-Zeit-Ausbeute treten dann ein, wenn diese Verbindungen bei Einschleusung in den Reaktor Temperaturen von 140 bis 280 °C aufweisen.

Die Erwärmung der Reaktionsteilnehmer auf die angegebenen Temperaturen kann jeweils einzeln erfolgen. Nach einer solchen getrennten Vorwärmung werden die Verbindungen dann - möglichst ohne Wärmeverlust - gemischt und als Gemisch in den Reaktor eingeführt. Diese Arbeitsweise wird bevorzugt durchgeführt.

Es ist jedoch auch möglich, die Reaktionskomponenten vorzumischen, dieses Gemisch auf Temperaturen bis 400 °C vorzuwärmen und dann in den Reaktor einzuleiten.

Es ist erfindungswesentlich, daß die Reaktionsteilnehmer beim Eintritt in den Reaktor Temperaturen in dem beanspruchten Temperaturbereich aufweisen. Es ist also darauf zu achten, daß nach der Erwärmung kein nennenswerter Temperaturabfall eintritt; Maßnahmen, einen solchen möglichen Temperaturabfall zu verhindern, sind dem Fachmann an sich bekannt.

Bei der Kontrolle über die erfolgte Erwärmung ist auch darauf zu achten, daß die Gastemperatur der Verbindungen gemessen wird und nicht die Temperatur des die Reaktionsteilnehmer erwärmenden Mediums. Nach Eintritt der Reaktionsteilnehmer in den Reaktor erfolgt die weitere Durchführung des Verfahrens in der in der Patentanmeldung P 40 01 820.2 beschriebenen Weise. Das erfindungsgemäße Verfahren wird durch die nachstehenden Beispiele erläutert.

Beispiele 1 bis 7

In einen Reaktor, dessen Länge 250 cm betrug und der einen Innendurchmesser von 60 cm hatte und in dem axialsymmetrisch ein sich drehender Verdrängerkörper gleicher Länge von 56 cm Durchmesser angeordnet war, wurde ein Gemisch aus Vinylchlorid und Trichlorsilan im Molverhältnis 1 : 1,4 eingespeist. Sowohl das Vinylchlorid als auch das Trichlorsilan wurden vor dem Einleiten in den Reaktor getrennt voneinander auf die in der nachstehenden Tabelle 1 genannten Temperaturen vorgewärmt, anschließend miteinander gemischt und dann in den Reaktor eingeleitet. Die Reaktor-Innentemperatur betrug bei allen Beispielen zwischen 600 und 640 °C. Die Verweilzeiten im Reaktor-Inneren lagen zwischen 1,0 und 1,8 Sekunden. Die Umdrehungsgeschwindigkeit des Verdrängerkörpers betrug immer 50 Umdrehungen pro Minute. Nach dem Austritt aus dem Reaktor wurde das Reaktionsgemisch kondensiert und anschließend durch Destillation aufgearbeitet.

Bei Anwendung der erfindungsgemäßen Verfahrensweise läßt sich die Kapazität eines vorgegebenen Reaktors beträchtlich erhöhen. Es läßt sich dabei auch der Umsatz des eingespeisten Vinylchlorids zu Vinyltrichlorsilan verbessern.

Während im Temperaturbereich zwischen 50 und 120 °C durch die Vorwärmung der Reaktanten nur eine beschränkte Zunahme der Reaktorkapazität eintritt, wird im Temperaturbereich zwischen 120 und 280 °C ein starker Anstieg der Reaktorkapazität durch die Einspeisung entsprechend vorgewärmter Reaktantengemische herbeigeführt. Durch Erhöhung der Eintrittstemperatur der Reaktanten in das Reaktorsystem von 120 auf 280 °C wird eine Verdopplung der Reaktorkapazität erreicht. Eine Erwärmung der Reaktanten vor Eintritt in den Reaktor auf Temperaturen zwischen 280 und 400 °C erbringt weitere Kapazitätssteigerungen des Reaktors.

Tabelle 1

| Beispiel | 1 (Vergleich) | 2 (Vergleich) | 3 | 4 | 5 | 6 | 7 |
|---|---|---|---|---|---|---|---|
| Eintrittstemperatur der Reaktionsteilnehmer (°C) | 50 | 100 | 120 | 140 | 180 | 280 | 400 |
| Vinyltrichlorsilan-Erträge (Tonnen/Monat) | 47 | 55 | 65 | 85 | 105 | 130 | 145 |
| Ausbeute Vinyltrichlorsilan (%) (bezogen auf Umsatz Vinylchlorid) | 70 | 70 | 72 | 73 | 74,5 | 76 | 77 |

**Patentansprüche**

1. Verfahren zur kontinuierlichen Herstellung von Vinyltrichlorsilan durch Umsetzung von Vinylchlorid mit Trichlorsilan bei Temperaturen von 400 bis 750 °C und mittleren Verweilzeiten von 0,2 bis 20

EP 0 456 901 B1

Sekunden bei Normaldruck in einem Rohrreaktor mit axialsymmetrisch darin angeordnetem rotierendem Verdrängerkörper, dadurch gekennzeichnet, daß die Reaktionskomponenten vor Eintritt in den Reaktor auf Temperaturen von 120 bis 400 °C erwärmt werden.

2. Verfahren gemäß Anspruch 1, dadurch gekennzeichnet, daß die Erwärmung auf eine Temperatur von 140 bis 280 °C erfolgt.

3. Verfahren gemäß Anspruch 1 oder 2, dadurch gekennzeichnet, daß die Reaktionskomponenten getrennt erwärmt, danach gemischt und anschließend in den Reaktor eingespeist werden.

**Claims**

1. Process for the continuous preparation of vinyltrichlorosilane by reaction of vinylchloride with trichlorosilane at temperatures of 400 to 750°C and average residence times of 0.2 to 20 seconds at normal pressure in a tubular reactor with rotating displacement body arranged axially symmetrically therein, **characterised in that** the reaction components are warmed to temperatures of 120 to 400°C before entry into the reactor.

2. Process according to claim 1, **characterised in that** heating takes place to a temperature of 140 to 280°C.

3. Process according to claim 1 or 2, **characterised in that** the reaction components are heated separately, subsequently mixed and then are supplied to the reactor.

**Revendications**

1. Procédé de préparation en continu de vinyltrichlorosilane par réaction de chlorure de vinyle avec du trichlorosilane à des températures allant de 400 à 750°C et avec des temps de séjour moyens de 0,2 à 20 secondes à pression normale dans un réacteur tubulaire comportant une pièce rotative de refoulement disposée selon une symétrie axiale, caractérisé en ce qu'on chauffe les composants de la réaction à des températures comprises entre 120 et 400°C avant leur entrée dans le réacteur.

2. Procédé selon la revendication 1, caractérisé en ce que le chauffage est effectué à une température de 140 à 280°C.

3. Procédé selon la revendication 1 ou 2, caractérisé en ce qu'on chauffe séparément les composants de la réaction, puis en ce qu'on les mélange et en ce qu'on les introduit ensuite dans le réacteur.